Europäisches Patentamt

European Patent Office

Office européen des brevets

(19)

(11) Veröffentlichungsnummer: **0 046 490**
**B1**

(12)

# EUROPÄISCHE PATENTSCHRIFT

(45) Veröffentlichungstag der Patentschrift:
**22.02.84**

(51) Int. Cl.³: **F 02 P 5/04**

(21) Anmeldenummer: **81105070.7**

(22) Anmeldetag: **30.06.81**

(54) **Elektronische Einrichtung zur Leerlaufstabilisierung von Verbrennungsmotoren.**

(30) Priorität: **10.07.80 DE 3026192**

(43) Veröffentlichungstag der Anmeldung:
**03.03.82 Patentblatt 82/9**

(45) Bekanntmachung des Hinweises auf die Patenterteilung:
**22.02.84 Patentblatt 84/8**

(84) Benannte Vertragsstaaten:
**FR GB IT**

(56) Entgegenhaltungen:
**DE - A - 2 720 609**
**US - A - 3 322 107**
**US - A - 4 128 091**

(73) Patentinhaber: **SIEMENS AKTIENGESELLSCHAFT,**
**Berlin und München Wittelsbacherplatz 2,**
**D-8000 München 2 (DE)**

(72) Erfinder: **Hartig, Gunter F., Dr., Im Laubenweg 14,**
**D-7500 Karlsruhe (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Elektronische Einrichtung zur Leerlaufstabilisierung von Verbrennungsmotoren

Die Erfindung bezieht sich auf eine elektronische Einrichtung zur Leerlaufstabilisierung zwischen Signalgeber für die Zündfunkenbildung, beispielsweise Hallgeber, und Zündeinrichtung von Verbrennungsmotoren, durch die bei fallender Motordrehzahl der Zündzeitpunkt unterhalb einer ersten Motordrehzahl vorverlegt wird, indem jeweils ein vom Signalgeber erhaltener Impuls verzögert wird und hinsichtlich des unverzögert gedachten Folgeimpulses als vorverlegtes Signal der Zündeinrichtung zugeführt wird, wobei außerhalb des Stabilisierungsbereichs zwischen der ersten und einer zweiten tieferen Motordrehzahl die unverzögerten Impulse abgegeben werden.

Es ist ein Signalgeber für die Zündfunkenbildung bekannt (DE-A-2 720 609), wonach bei einer kontaktlos arbeitenden Zündanlage die Schließwinkeldauer zur thermischen Entlastung der Zündspule so gesteuert ist, daß bei mittleren und hohen Drehzahlen ein großer Schließwinkel und bei niedrigen Drehzahlen ein kleiner Schließwinkel erzielt wird. Dadurch kann man schon bei Leerlaufdrehzahlen mit einer Zündspule Zündfunken bilden, ohne diese thermisch zu überlasten. Anschaulich gesprochen handelt es sich dabei um eine unterschiedlich lange Impulsdauer bezogen auf eine bestimmte Periode des Signalgebers für die Zündfunkenbildung. Bei einer elektronischen Einrichtung zur Leerlaufstabilisierung der eingangs geschilderten Art werden der Zündeinrichtung dagegen in Abhängigkeit von der Drehzahl des Motors im wesentlichen gleichartige Impulse bei unterschiedlichem Impulsabstand zugeführt. Wesentlich ist dabei, daß bezogen auf die Umdrehung der Kurbelwelle des Motors der Zündzeitpunkt verändert werden kann.

Eine auf dem Markt befindliche Einrichtung zur Leerlaufstabilisierung arbeitet im gesamten Stabilisierungsbereich mit konstanter Verzögerungszeit und somit bei abnehmender Motordrehzahl mit zunehmender Frühzündung. Motortechnisch ist eine solche Funktionskennlinie unbefriedigend. Angestrebt werden Kennlinien, an deren Bereich mit konstanter Verzögerungszeit, also zunehmender Frühzündung, sich ein Bereich mit zunehmender Verzögerungszeit und konstanter Frühzündung anschließt. Ein solches Funktionsverhalten der Stabilisierungseinrichtung berücksichtigt, daß wegen der Motorkennlinie zunächst zunehmende Frühzündung ein wachsendes Drehmoment erzeugt und daß bei weiter fallender Motordrehzahl eine relativ zurückgenommene Frühzündung das Drehmoment ansteigen läßt.

Durch eine Leerlaufstabilisierung möchte man sowohl bei kaltem Motor, als auch bei warmgelaufenem Motor bei geringster Kraftstoffzufuhr einen ruhigen Lauf erreichen. Der anzustrebende Funktionsverlauf erfordert theoretisch einen hohen Aufwand an Bauelementen und Schaltungstechnik, der den wirtschaftlichen Erfolg infrage stellt.

Der Erfindung liegt die Aufgabe zugrunde, den geschilderten anzustrebenden Funktionsverlauf durch eine elektronische Einrichtung zur Leerlaufstabilisierung zu realisieren, die mit relativ wenigen Bauelementen und geringem schaltungstechnischen Aufwand arbeitet.

Die Lösung der geschilderten Aufgabe besteht darin, daß die Verzögerungseinrichtung im wesentlichen besteht aus einem Sägezahngenerator, der von einer Flanke eines Impulses vom Signalgeber getriggert wird, der ausgangsseitig mit einem Speicher sowie einem Verstärker mit Schwellwertschalter verbunden ist, deren Ausgänge zu einem Komparator geführt sind, der darauf abgestimmt ist, beim Erreichen und Überschreiten des im Speicher abgespeicherten Wertes durch den Wert am Verstärkerausgang ein Signal abzugeben, das nach weiterer Aufbereitung der Zündeinrichtung zugeleitet wird. Dadurch wird das Funktionsverhalten von einfachen Bauelementen und Schaltungsgruppen in günstiger Weise genutzt, um bei fallender Motordrehzahl innerhalb des Stabilisierungsbereiches zunächst eine konstante Verzögerungszeit und anschließend zunehmende Verzögerungszeit bei konstanter Frühzündung zu erzielen. Da die Sägezahnspannung bis zum Hochlaufen zum Schwellwert eine konstante Zeit benötigt, wird zunächst eine konstante Verzögerung erzielt. Oberhalb des Schwellwertes sorgt die Verstärkung unter den weiteren Voraussetzungen für eine zunehmende Verzögerung und konstante Frühzündung. Jedem Verstärkungsfaktor entspricht dabei eine im Diagramm Grad Frühzündung über der Motordrehzahl bestimmte Plateauhöhe konstanter Frühzündung.

Eine besonders einfache und vorteilhafte Aufbereitung des am Verstärkerausgang abgegebenen Signals weist die Merkmale auf,
— daß der Komparator ausgangsseitig ein Differenzierglied enthält,
— daß der Ausgang des Komparators mit einer monostabilen Kippstufe verbunden ist, die einen gesteuerten Schalter aufweist, dessen Steuereingang mit dem Komparator und der eingangsseitig mit dem Speicher verbunden ist und ausgangsseitig mit dem Eingang eines Operationsverstärkers, der über einen Speicher, der von einem Entladungszweig überbrückt ist, an Masse liegt,
— und daß der Ausgang der monostabilen Kippstufe, der den Ausgang der Verzögerungseinrichtung darstellt, mit einem Eingang einer Vorrangschaltung verbunden ist, an deren weiterem Eingang eine Verbindung zum Eingang der Verzögerungseinrichtung hergestellt ist, wobei die Vorrangschaltung darauf eingerichtet ist, bei einem Signal an ihren Eingangsklemmen zur monostabilen Kippstufe dieses zu ihrem Ausgang weiterzugeben und ohne ein solches Signal den mit dem Eingang der Verzögerungseinrichtung verbundenen Eingang mit ihrem Ausgang zu verbinden.

Dadurch wird ein vom maximalen Wert des Sägezahns im Speicher hinter dem Sägezahngenerator in seiner Dauer beeinflußter monostabiler Impuls in der monostabilen Kippstufe erzielt. Wesentlich ist, daß das Tastverhältnis von Impuls zu Nichtimpuls konstant bleibt. Dadurch erübrigt es sich, von zwei Flanken des vom Signalgeber zugeführten Impulses, also von der negativen und von der positiven Flanke, ein Triggersignal abzuleiten. Der theoretisch erforderliche Aufwand an Bauelementen und Schaltungstechnik verringert sich dadurch in der Praxis weiter um etwa die Hälfte.

Um einen sicheren Maximalwertspeicher besonders einfach zu erzielen ist es günstig, wenn zwischen dem Eingang der Verzögerungseinrichtung und dem Speicher bzw. dem Sägezahngenerator die Abgriffe eines Differenziergliedes für zwei kurz aufeinander folgende Impulse liegen, wobei dieses Differenzierglied eingangsseitig den Eingang der Verzögerungseinrichtung bildet. Es ist dann sichergestellt, daß in den Speicher eingeschrieben werden kann, kurz bevor der Sägezahngenerator zu arbeiten beginnt, wodurch die vom Sägezahngenerator eingeschriebene Spannung ein lineares Abbild des Zeitverlaufes zwischen zwei Triggerflanken des Signals vom Signalgeber ist.

Eine besonders einfache Vorrangschaltung weist zwei Differenzierglieder aus Blind- und Wirkwiderständen auf, die zwischen Blind- und Wirkwiderständen miteinander verbunden sind, wobei die Wirkwiderstände zusammen mit zwei an der Verbindungsstelle angeschlossenen, hintereinander liegenden Invertoren eine bistabile Kippstufe dadurch bilden, daß von einem Wirkwiderstand eine Verbindung zwischen den Invertoren und vom anderen Wirkwiderstand eine Verbindung hinter dem zweiten Inverter angeschlossen ist. Eine solche Vorrangschaltung läßt sich allgemein vorteilhaft einsetzen.

Die Erfindung soll nun anhand von Ausführungsbeispielen näher erläutert werden:

In Fig. 1 ist die elektronische Einrichtung zur Leerlaufstabilisierung als Blockschaltbild wiedergegeben. Sie besteht im wesentlichen aus einer Verzögerungseinrichtung, der ein Schmitt-Trigger vorgeschaltet ist, und aus einer Vorrangschaltung.

In Fig. 2 ist die Verzögerungseinrichtung der Einrichtung zur Leerlaufstabilisierung nach Fig. 1 als Blockschaltbild dargestellt.

Fig. 3 gibt ein Diagramm für die Funktionskennlinie wieder. Auf der Ordinate ist die Frühzündung in Winkelgraden gemessen an der Kurbelwelle abgetragen und auf der Abszisse die Motordrehzahl.

In Fig. 4 ist der Aufbau des Schmitt-Triggers mit Inverter dargestellt.

In Fig. 5 ist ein Ausführungsbeispiel für die Vorrangschaltung dargestellt.

In Fig. 6 ist ein vorteilhafter Aufbau des Differenziergliedes, des Eingangs der Verzögerungseinrichtung, wiedergegeben.

In Fig. 7 ist ein Ausführungsbeispiel für den Sägezahngenerator dargestellt.

In Fig. 8 ist ein Ausführungsbeispiel für den Speicher wiedergegeben.

In Fig. 9 ist ein Aufbau für den Verstärker mit Schwellwertschalter dargestellt.

In Fig. 10 ist ein Aufbau für den Komparator mit Differenzierglied wiedergegeben.

In Fig. 11 ist der Aufbau der monostabilen Kippstufe dargestellt.

In Fig. 12 ist ein Gesamtschaltbild der elektronischen Einrichtung zur Leerlaufstabilisierung mit zusätzlichen Bauelementen für die Spannungsversorgung wiedergegeben.

In Fig. 13 ist ein vom Signalgeber für die Zündfunkenbildung ausgehender Impulsverlauf veranschaulicht. Im Diagramm ist auf der Ordinate die Spannung am Ausgang des Signalgebers und auf der Abszisse die Zeit abgetragen.

In Fig. 14 ist veranschaulicht, wie die Spannung nach Fig. 13 durch den Schmitt-Trigger an seinem Ausgang zur Verfügung gestellt wird.

In den Fig. 15 bis 19, die zusammenarbeiten, ist das Zusammenwirken der einzelnen Funktionsgruppen, vom Vorrangschalter her gesehen, dargestellt:

In Fig. 15 ist das am Ausgang des Schmitt-Triggers zur Verfügung gestellte Signal dargestellt. Im Diagramm ist auf der Ordinate die Ausgangsspannung und auf der Abszisse die Zeit wiedergegeben.

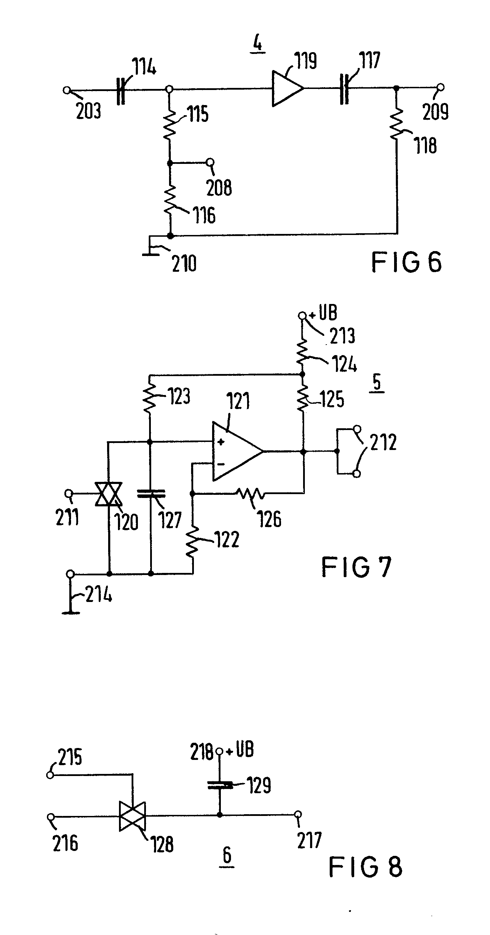

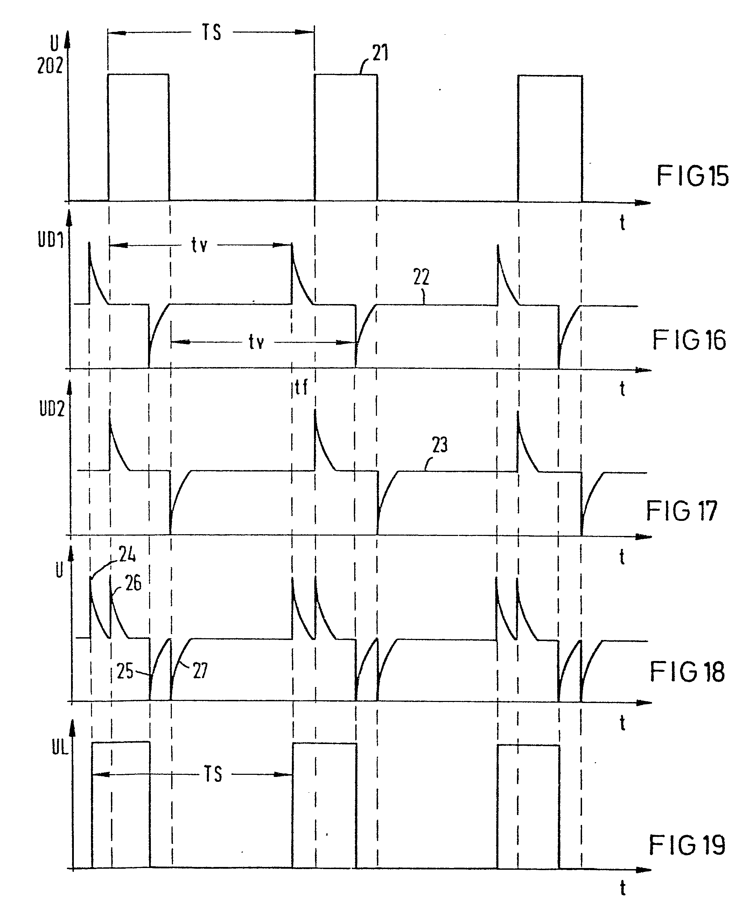

In Fig. 16 ist in der Darstellungsweise nach Fig. 15 das Signal am Ausgang des ersten Differenziergliedes im Vorrangschalter — nach Fig. 5 — aufgetragen. Dargestellt ist also das durch die Verzögerungseinrichtung verzögerte Signal.

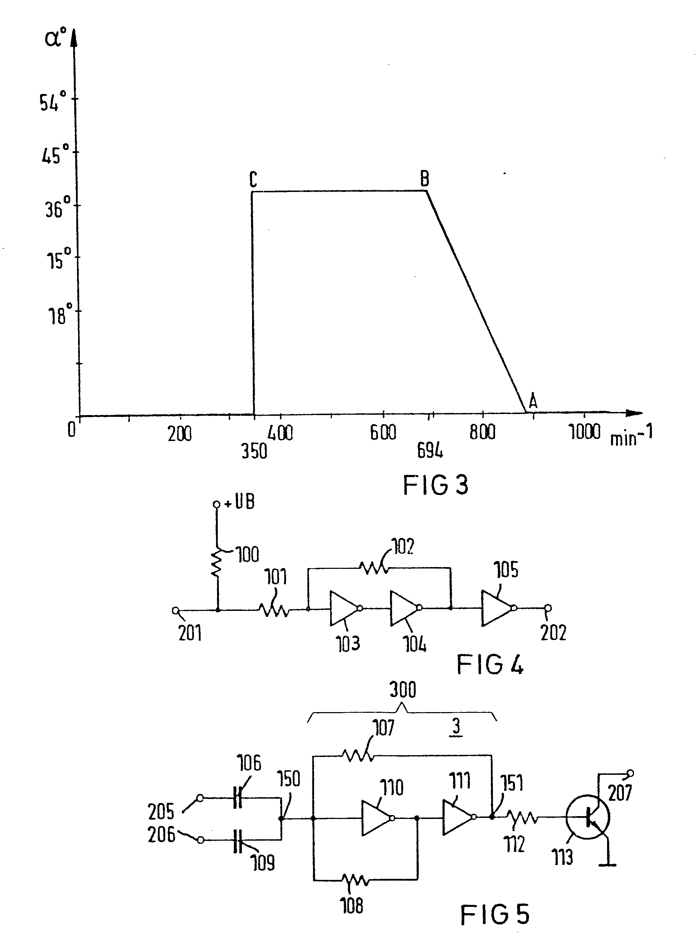

In Fig. 17 ist die Spannung am Ausgang des zweiten Differenziergliedes im Vorrangschalter, das dem Schmitt-Trigger nach Fig. 4 direkt nachgeschaltet ist, wiedergegeben. Dargestellt ist also das unverzögerte Signal.

In Fig. 18 sind die Signale nach den Fig. 16 und 17 am Eingang der Kippstufe des Vorrangschalters wiedergegeben.

In Fig. 19 ist die Spannung am Ausgang der Kippstufe des Vorrangschalters, also am Ausgang der Vorrangschaltung, dargestellt. Auf der Ordinate ist wieder die Spannung und auf der Abszisse die Zeit angetragen.

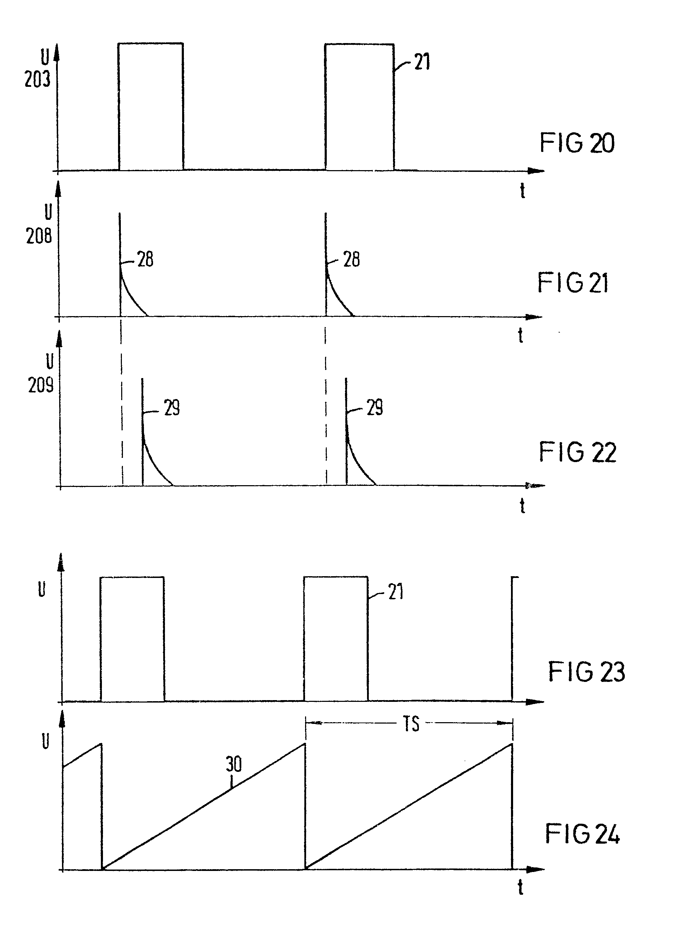

In den Fig. 20 bis 22, die zusammenarbeiten, ist veranschaulicht, wie das Differenzierglied nach Fig. 6 zur positiven Flanke am Ausgang des Schmitt-Triggers mit Inverter zwei zeitlich kurz aufeinander folgende Nadelimpulse bildet:

In Fig. 20 ist das Signal am Ausgang des Schmitt-Triggers mit Inverter bzw. am Eingang der Verzögerungseinrichtung wiedergegeben.

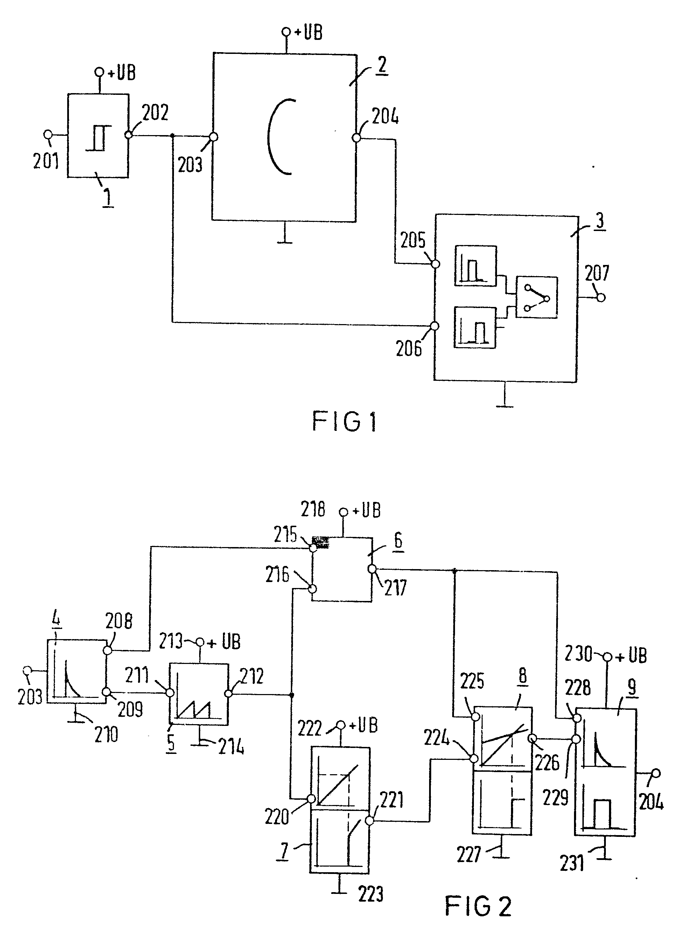

In Fig. 21 ist das differenzierte Signal zur positiven Flanke des Signals nach Fig. 20 wiedergegeben, das am Ausgang 208 nach Fig. 2 zur Verfügung steht.

In Fig. 22 ist das differenzierte Signal am Ausgang 209 des Ausführungsbeispiels veranschaulicht.

In den Fig. 23 und 24, die zusammenarbeiten, ist veranschaulicht, wie die Sägezahnspannung im Sägezahngenerator vom Signal am Eingang der Verzögerungseinrichtung abhängt. Die positive Flanke setzt den Sägezahngenerator jeweils auf Null:

In Fig. 23 ist also die Eingangsspannung der Verzögerungseinrichtung wiedergegeben.

In Fig. 24 ist die Spannung am Ausgang des Sägezahngenerators dargestellt. Auf der Abszisse ist wieder jeweils die Zeit und auf der Ordinate die Spannung abgetragen.

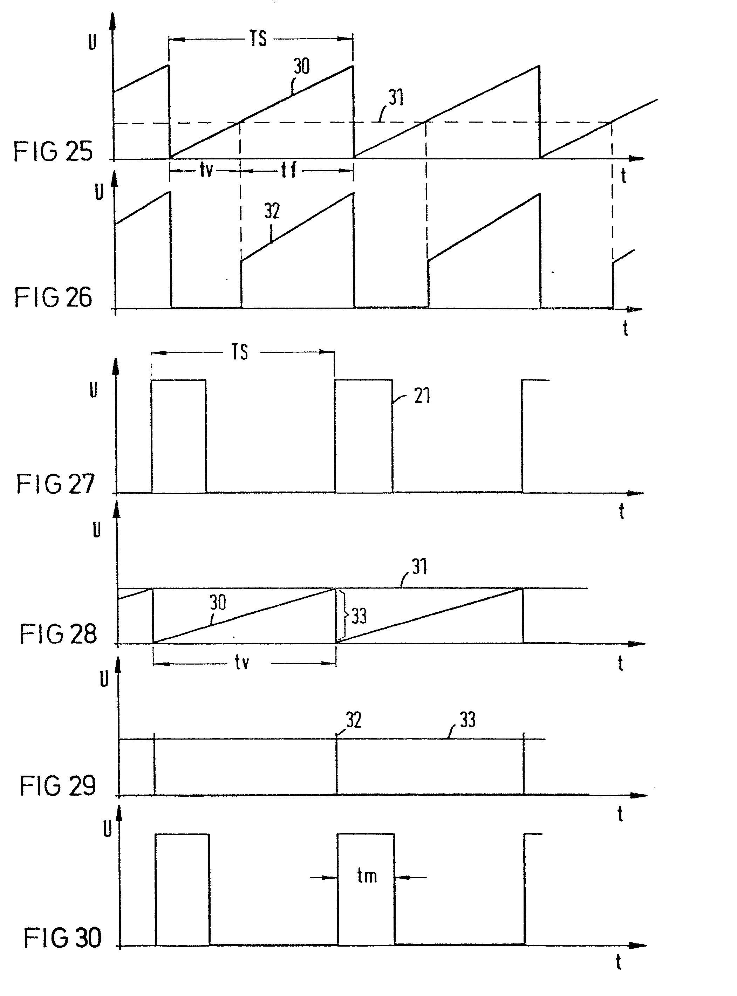

In den Fig. 25 und 26, die zusammenarbeiten, ist das Arbeitsprinzip des Schwellwertschalters mit Verstärker veranschaulicht:

In Fig. 25 ist die Spannung am Ausgang des Sägezahngenerators dargestellt.

In Fig. 26 ist die Spannung am Ausgang des Verstärkers mit Schwellwertschalter wiedergegeben.

In den Fig. 27 bis 30, die zusammenarbeiten, ist das Zusammenspiel der wesentlichen Baugruppen in der Verzögerungseinrichtung für den Grenzfall der beginnenden Verzögerung veranschaulicht:

In Fig. 27 ist das Signal am Eingang der Verzögerungseinrichtung dargestellt.

In Fig. 28 ist das Signal am Ausgang des Sägezahngenerators, zusammen mit einem eingestellten Schwellwert für den Schwellwertschalter des Verstärkers, aufgetragen.

In Fig. 29 ist die Spannung am Ausgang des Verstärkers mit Schwellwertschalter dargestellt und zugleich die Maximalspannung im Speicher aufgrund des vorausgegangenen Sägezahnsignals. Der Verstärker springt also gerade an und wird wieder ausgeschaltet.

In Fig. 30 ist das Signal am Ausgang der monostabilen Kippstufe, also am Ausgang der Verzögerungseinrichtung, dargestellt.

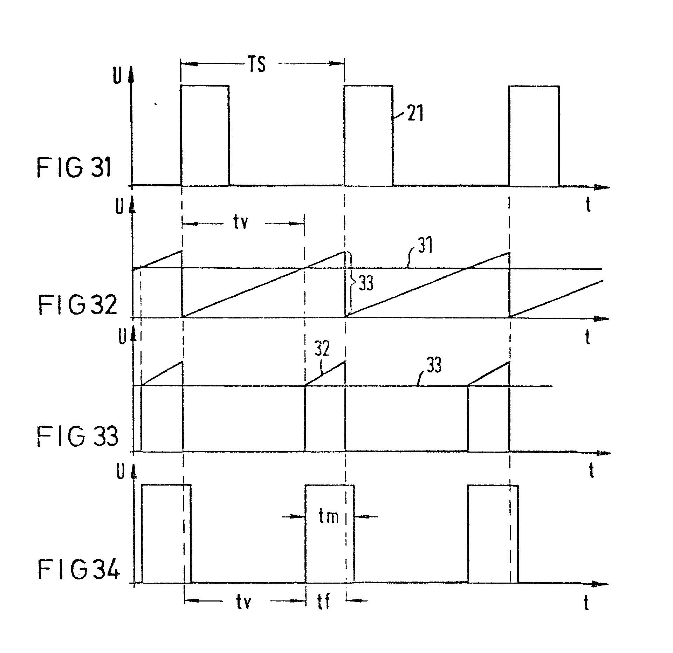

In den Fig. 31 bis 34, die zusammenarbeiten, ist das Zusammenspiel der Einheiten in der Verzögerungseinrichtung für den Bereich wachsender Verzögerung veranschaulicht:

In Fig. 31 ist das Signal am Eingang der Verzögerungseinrichtung, entsprechend Fig. 27, dargestellt.

In Fig. 32 ist das Signal am Ausgang des Sägezahngenerators, bei eingezeichnetem Schwellwert für den Verstärker mit Schwellwertschalter, wiedergegeben.

In Fig. 33 ist das Signal am Ausgang des Verstärkers mit Schwellwertschalter wiedergegeben; zugleich ist die im Speicher abgespeicherte maximale Spannung des vorausgehenden Sägezahns als Parallele zur Abszisse eingetragen.

In Fig. 34 ist das Signal am Ausgang der monostabilen Kippstufe, also am Ausgang der Verzögerungseinrichtung, wiedergegeben.

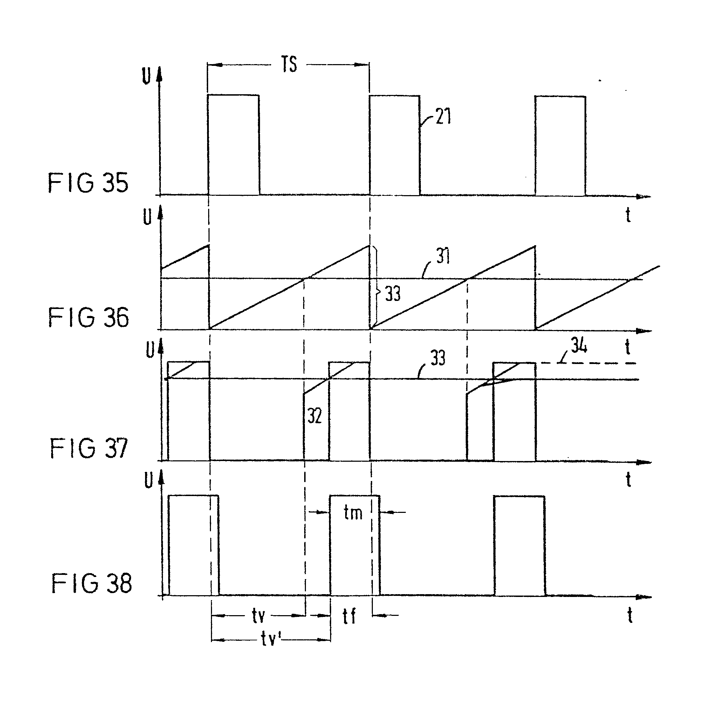

In den Fig. 35 bis 38, die zusammenarbeiten, ist das Zusammenspiel der Einheiten der Verzögerungseinrichtung im Arbeitsbereich zunehmender Verzögerung und somit konstanter Frühzündung veranschaulicht:

In Fig. 35 ist wieder das Signal am Eingang der Verzögerungseinrichtung, entsprechend Fig. 27, aufgetragen.

In Fig. 36 ist die Spannung am Ausgang des Sägezahngenerators wiedergegeben. Parallel zur Abszisse ist der Schwellwert des Verstärkers mit Schwellwertschalter als Gerade wiedergegeben.

In Fig. 37 ist einmal das Signal am Ausgang des Verstärkers mit Schwellwertschalter, entsprechend Fig. 33, wiedergegeben. Weiter ist parallel zur Abszisse die maximale im Speicher abgespeicherte Sägezahnspannung eingetragen. Als Rechteckimpuls ist weiter das Signal am Ausgang des Komparators bei nicht berücksichtigtem Differenzierglied wiedergegeben. Parallel zur Abszisse ist strichliert weiter eine Grenze des Verstärkers veranschaulicht. Oberhalb dieser Grenzspannung gibt die Verzögerungseinrichtung kein Signal mehr ab, so daß der Vorrangschalter das unverzögerte Signal vom Signalgeber weitergibt. Man befindet sich dann außerhalb des Arbeitsbereichs der elektronischen Einrichtung zur Leerlaufstabilisierung.

In Fig. 38 ist das Signal am Ausgang der Verzögerungseinrichtung, also am Eingang des Vorrangschalters wiedergegeben. Mit tv und tv' sind Verzögerungszeiten und mit tf die Frühzündung wiedergegeben.

Die Ausführungsbeispiele werden nun im einzelnen erläutert:

Die elektronische Einrichtung zur Leerlaufstabilisierung nach Fig. 1 besteht aus einem Schmitt-Trigger mit Inverter, dem Bauteil 1 sowie einer Verzögerungseinrichtung 2 und einer Vorrangschaltung 3. Der Schmitt-Trigger mit Inverter, Bauteil 1, weist die Eingangsklemme 201 und die Ausgangsklemme 202 auf. Die Verzögerungseinrichtung 2 hat die Eingangsklemme 203 und die Ausgangsklemme 204. Die Vorrangschaltung 3 weist die Eingangsklemmen 205 und 206 sowie die Ausgangsklemme 207 auf. Das Netzwerk wird vervollständigt durch die Betriebsspannung UB, in der Praxis eine positive Betriebsspannung, und durch das Massepotential. Wenn die Verzögerungseinrichtung an ihrem Ausgang 204 ein Signal abgibt, führt die Vorrangschaltung ein Signal an ihrem Ausgang 207. Wenn die Verzögerungseinrichtung 2 an ihrem Ausgang 204 kein Signal abgibt, überführt der Vorrangschalter das Signal vom Ausgang 202 zu seinem Ausgang 207. Im Stabilisierungsbereich gibt die Verzögerungseinrichtung 2 an ihrem Ausgang 204 ein Signal ab. Der Schmitt-Trigger mit Inverter 1, dient lediglich in bekannter Weise dazu, das am Eingang 201 vom Signalgeber anstehende Signal sauber abzubilden.

Die Verzögerungseinrichtung 2 besteht im Ausführungsbeispiel nach Fig. 2 im wesentlichen aus folgenden Bauelementen:

Einem Differenzierglied 4,
einem Sägezahngenerator 5,
einem Speicher 6,
einem Verstärker mit Schwellwertschalter,
    Bauteil 7,
einem Komparator mit Differenzierglied,
    Bauteil 8,
sowie einer monostabilen Kippstufe 9.

Das Differenzierglied 4 weist den Eingang 203 und zwei Ausgänge, 208 sowie 209, auf. Ein Anschluß zur Erde ist mit 210 bezeichnet. Der Sägezahngenerator 5 hat den Eingang 211 und den Ausgang 212 sowie den Anschluß 213 für Betriebsspannung und den Anschluß 214 zur Masse. Der Speicher 6 zum Abspeichern des Maximalwertes des Sägezahns weist die Eingänge 215 und 216 sowie den Ausgang 217 auf. Der Anschluß für Betriebsspannung ist mit 218 bezeichnet. Der Verstärker mit Schwellwertschalter 7, weist den Eingang 220, den Ausgang 221 sowie den Anschluß 222 für Betriebsspannung und den Anschluß 223 für Masse bzw. Erde auf. Der Komparator mit Differenzierglied 8, weist die Eingänge 225 und 224, den Ausgang 226 sowie den Anschluß 227 für Masse auf. Die monostabile Kippstufe 9 weist die Eingänge 228 und 229 sowie den Ausgang 204 auf. Beim Anschluß 230 liegt die Betriebsspannung und am Anschluß 231 Masse an.

Die Funktionskennlinie im Diagramm nach Fig. 3 weist innerhalb des Stabilisierungsbereiches eine von A nach B linear ansteigende Flanke bei konstanter Verzögerungszeit und zunehmender Frühzündung und einen Plateaubereich BC mit zunehmender Verzögerungszeit und konstanter Frühzündung auf.

Nachstehend werden Ausführungsbeispiele für den Aufbau der einzelnen Schaltungselemente anhand der Fig. 4 bis 11 gegeben:

Die Versorgungsspannung plus UB für einen Schmitt-Trigger mit nachgeschaltetem Inverter 1, nach Fig. 4 liegt an einem Widerstand 100 zur Anpassung an den Ausgang eines beispielsweise als Signalgeber für die Zündfunkenbildung verwendeten Hallgebers mit offenem Kollektorausgang an. Auf der zur Batteriespannung abgewandten Seite des Widerstandes 100 liegt die Eingangsklemme 201, die mit dem eigentlichen Teil des Schmitt-Triggers verbunden ist. Er besteht aus einem Widerstand 101 und einer in Reihe liegenden Parallelschaltung aus Widerstand 102 und zwei hierzu im Parallelzweig hintereinanderliegenden Invertoren 103 und 104. Der Parallelschaltung ist ein weiterer Inverter 105 nachgeschaltet, der es ermöglicht, in der elektronischen Leerlaufstabilisierung mit Differenziergliedern zu arbeiten. Der Ausgang des Schmitt-Triggers ist mit 202 bezeichnet.

Die Vorrangschaltung 3 mit den Eingangsklemmen 205 und 206 und der Ausgangsklemme 207 wird im Ausführungsbeispiel nach Fig. 5 gebildet durch ein erstes Differenzierglied, das seinerseits gebildet wird durch einen Blindwiderstand, einen Kondensator 106, und den an seinem Ausgang parallel liegenden Wirkwiderständen, den Widerständen 107 und 108, und einem zweiten Differenzierglied, das gebildet wird durch einen Blindwiderstand, einen Kondensator 109, und den wieder an seinem Ausgang liegenden Wirkwiderständen, den Widerständen 107 und 108. Die Widerstände 107 und 108 bilden zusammen mit zwei Invertoren 110 und 111 eine bistabile Kippstufe 300, deren Eingang der Klemmenpunkt 150 und deren Ausgang der Klemmenpunkt 151 ist. Der Widerstand 107 liegt parallel zu den in Reihe angeordneten Invertoren 110 und 111. Der Widerstand 108 ist parallel zum Inverter 110 angeordnet.

Bei gleich großen Widerständen 107 und 108 liegt der Eingang 150 auf Mittelpotential hinsichtlich der Versorgungsspannung, die in üblicher Weise an den Invertoren 110 und 111 anliegend vorzustellen ist. Der bistabilen Kippstufe 300 ist ein Widerstand 112 und ein Transistor 113 in sogenannter offener Kollektorschaltung nachgeschaltet, um die Anpassung an eine Transistorzündung zu ermöglichen. Diese Bauglieder, Widerstand 112 und Transistor 113 sind für die Wirkungsweise der elektronischen Leerlaufstabilisierung unerheblich. Die Ausgangsklemme 207 kann man sich daher auch vor dem dann fehlenden Widerstand 112 vorstellen.

Die Bauteile der Verzögerungseinrichtung 2 — nach Fig. 1 — mit der Eingangsklemme 203 und der Ausgangsklemme 204 sind im Ausführungsbeispiel wie folgt verwirklicht:

Das Differenzierglied 4, nach Fig. 6, mit der Eingangsklemme 203 weist zwei Ausgangsklemmen auf, 208 für einen ersten Nadelimpuls, und 209 für einen kurz darauf folgenden zweiten Nadelimpuls. Das Differenzierglied 4 besteht im wesentlichen zunächst aus einem Kondensator 114 und zwei in Reihe liegenden Widerständen 115 und 116, die bei der Klemme 210 an Masse anliegen. Die Anschlußklemme 208 liegt zwischen den Widerständen 115 und 116. Ein zweites Differenzierglied mit dem Kondensator 117 und dem an Masse liegenden Widerstand 118 ist mit dem ersten Differenzierglied durch einen Inverter 119 gekoppelt. Wenn am ersten Differenzierglied hinter den Kondensator 114 der gebildete Nadelimpuls abfällt, geht der Ausgang des Inverters in den High-Zustand über, der durch das zweite Differenzierglied zu einem Nadelimpuls umgeformt wird. Zunächst steht also an der Ausgangsklemme 208 ein erster Nadelimpuls an und kurz darauf, wenn der erste Nadelimpuls abgefallen ist, an der Ausgangsklemme 209 ein zweiter Nadelimpuls.

Der Sägezahngenerator 5 — der Verzögerungseinrichtung 2 — mit der Eingangsklemme 211, der Ausgangsklemme 212 und der Klemme 213 zum Anschließen an die Spannungsversorgung, beispielsweise plus UB, und der Klemme 214 für Massepotential wird im Ausführungsbeispiel nach Fig. 7 folgendermaßen verwirklicht:

Die Eingangsklemme 211 ist mit dem Steuereingang eines elektronischen Schalters 120, im Ausführungsbeispiel ein CMOS-Baustein — ein sogenannter bilateraler Schalter —, verbunden. Der elektronische Schalter 120 liegt im Eingangskreis eines Operationsverstärkers 121, und zwar am nicht invertierenden Eingang. Der invertierende Eingang ist über den Widerstand 122 über die Klemme 214 an Masse geschaltet. Die dargestellte Beschaltung des Operationsverstärkers 121 mit den Widerständen 123, 124, 125, 126 und 122 sowie mit dem Kondensator 127 läßt den Operationsverstärker als Sägezahngenerator arbeiten. Wenn an der Eingangsklemme 211 ein Nadelimpuls eintrifft, wird der elektronische Schalter 120 leitend und der Kondensator 127 entladen, wodurch der Operationsverstärker 121 auf die minimale Spannung, also auf Null, gesetzt wird. Dadurch wird die Bildung eines Sägezahns ausgelöst. Dieser Vorgang wiederholt sich beim Eintreffen des nächsten Nadelimpulses.

Der Speicher 6 der Verzögerungseinrichtung 2, mit den Eingangsklemmen 215 und 216 und der Ausgangsklemme 217 sowie der Klemme 218, zum Anschließen der Versorgungsspannung, wird im Ausführungsbeispiel nach Fig. 8 durch einen elektronischen Schalter 128, beispielsweise ein CMOS-Schalter, und einen Kondensator 129 gebildet. Von der Eingangsklemme 216 her liegt der elektronische Schalter 128 mit dem Kondensator 129 in Reihe zur Klemme 218 für die Versorgungsspannung. Die Eingangsklemme 215 führt zum Steuereingang des elektronischen Schalters 128. Zwischen dem Schalter 128 und dem Kondensator 129 erfolgt der Abgriff zu der Ausgangsklemme 217. Die Eingangsklemme 215 empfängt den Übernahmebefehl und die Eingangsklemme 216 wirkt als Speichereingang solange an der Eingangsklemme der Übernahmebefehl ansteht. Wenn an der Eingangsklemme 215 ein positiver Nadelimpuls ansteht, wird der elektronische Schalter 128 leitend gesteuert und eine an der Eingangsklemme 216 anstehende Spannung lädt den Kondensator 129 um, so daß die an der Eingangsklemme 216 anstehende Information in Form eines Spannungspegels in den Speicher eingelesen wird.

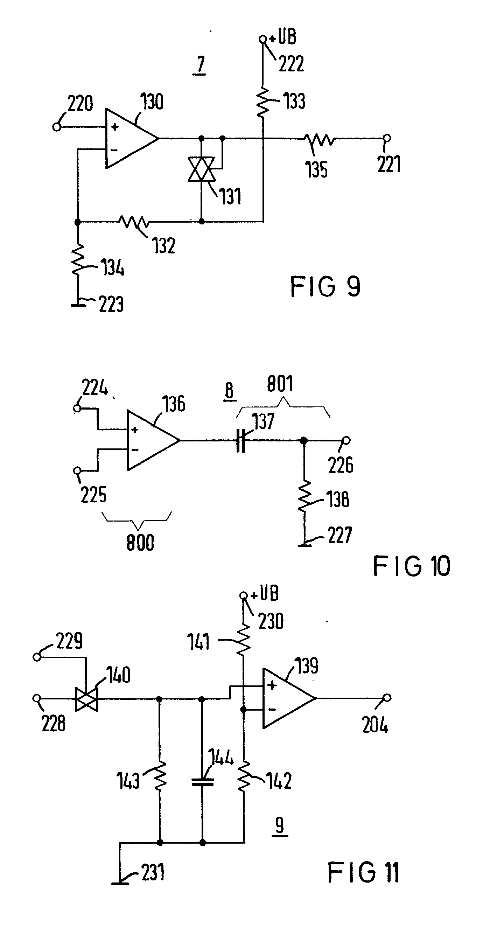

Der Verstärker mit Schwellwertschalter, Bauteil 7 der Verzögerungseinrichtung 2, hat nach Fig. 9 die Eingangsklemme 220 und die Ausgangsklemme 221 sowie die Klemme 222 zum Anschließen an Versorgungsspannung und die Klemme 223 für Masse. Die Eingangsklemme 220 ist mit dem nicht invertierenden Eingang eines Operationsverstärkers 130 verbunden. Der Ausgang des Operationsverstärkers 130 ist über einen elektronisch gesteuerten Schalter 131, im Ausführungsbeispiel ein CMOS-Schalter, und einen Widerstand 132 auf den invertierenden Eingang zurückgekoppelt. Durch die Widerstände 133, 132 und den Widerstand 134, zwischen der Versorgungsspannung und Masse, wird zwischen den Widerständen 132 und 134 der Abgriff für einen Spannungsteiler gebildet. Dieser ist auf den invertierenden Eingang des Operationsverstärkers 130 geschaltet. Dadurch ist am Operationsverstärker 130 ein Schwellwert

$$UB \cdot \frac{R\,134}{R\,134 + R\,132 + R\,133}$$

eingestellt. Erreicht die an der Eingangsklemme 220 anstehende Spannung den vorgegebenen Schwellwert, so schaltet der Operationsverstärker 130 durch, wodurch der Schalter 131 leitend gesteuert wird. Der nun als nicht invertierender Proportionalverstärker arbeitende Operationsverstärker 130 hat den Verstärkungsfaktor V130

$$V\,130 = 1 + \frac{R\,132}{R\,134}.$$

Im Ausführungsbeispiel liegt zwischen Ausgang des Operationsverstärkers 130 und der Ausgangsklemme 221 noch ein Widerstand 135.

Der Komparator 800 mit Differenzierglied 801, Baugruppe 8 der Verzögerungseinheit 2, weist nach Fig. 10 die Eingangsklemme 224 und 225 sowie die Ausgangsklemme 226 und eine Klemme 227 zum Anschließen an Masse auf. Ein Operationsverstärker 136 wird als Komparator betrieben; ihm ist ein Differenzierglied nachgeschaltet. Das Differenzierglied besteht aus einem Kondensator 137 und einem Widerstand 138. Die Eingangsklemme 224 ist mit dem nicht invertierenden Eingang und die Eingangsklemme 225 mit dem invertierenden Eingang des Operationsverstärkers 136 verbunden. Zwischen dem Kondensator 137 und dem Widerstand 138 ist eine Verbindung zur Ausgangsklemme 226 hergestellt. Übersteigt die an der Eingangsklemme 224 anstehende Spannung die an der Eingangsklemme 225 anstehende Spannung, so wird der Komparator durchgeschaltet, so daß an seinem Ausgang High-Signal ansteht. Die positive Flanke, beim Übergang in das High-Signal, am Ausgang des Operationsverstärkers 136 wird durch das Differenzierglied in einen Nadelimpuls umgeformt, der an der Ausgangsklemme 226 zur Verfügung steht.

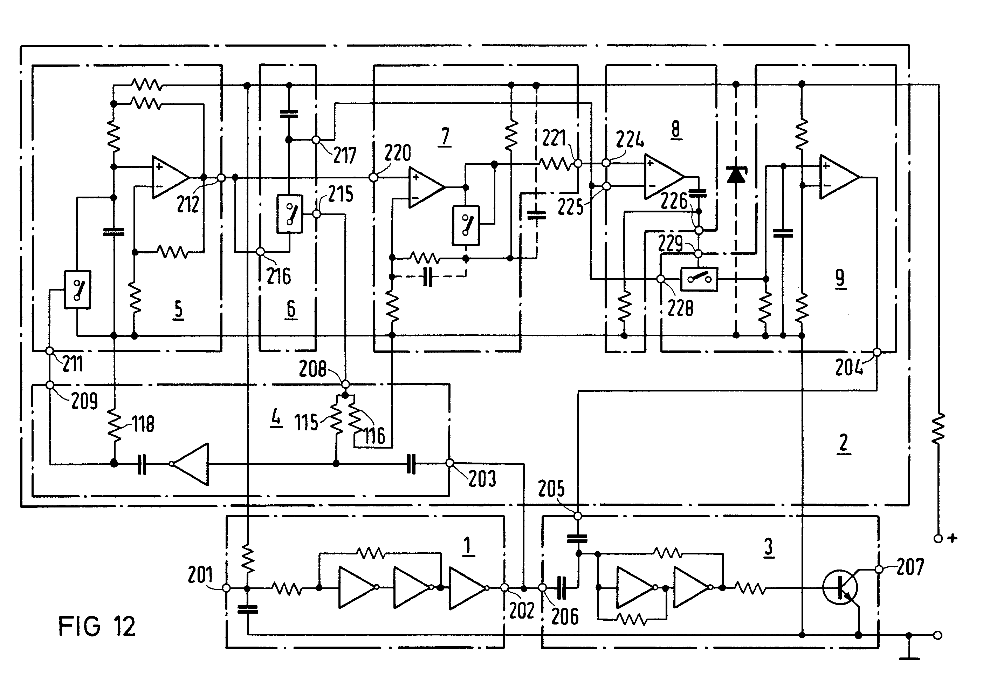

Die monostabile Kippstufe 9 nach Fig. 11, der Verzögerungseinrichtung 2, mit den Eingangsklemmen 228 und 229 und der Ausgangsklemme 204 sowie den Klemmen 230, zum Anschließen an Versorgungsspannung, und der Klemme 231, zum Anschließen an Masse, ist dafür eingerichtet, ein Ausgangssignal einstellbarer Dauer abzugeben. Am nicht invertierenden Eingang eines Operationsverstärkers 139 ist über einen elektronisch gesteuerten Schalter 140, im Ausführungsbeispiel ein CMOS-Schalter, die Eingangsklemme 228 angeschlossen. Das hier vom Speicher anstehende Signal wirkt als Zeitvorgeber. Am Steuereingang des Schalters 140 ist die Anschlußklemme 229 angeschlossen, die als Triggereingang wirkt. Hierdurch wird also bestimmt, zu welchem Zeitpunkt am Ausgang ein Signal zur Verfügung steht. Der invertierende Eingang des Operationsverstärkers 139 ist durch die Widerstände 141 und 142, die als Spannungsteiler wirken, mit einem Schwellwert beaufschlagt. Der nicht invertierende Eingang des Operationsverstärkers 139 liegt über einen Kondensator 144 und einen hierzu parallel angeordneten Widerstand 143 an Masse.

Wenn von der als Triggereingang wirkende Eingangsklemme 229 der Schalter 140 leitend gesteuert ist, kann ein an der Eingangsklemme 228 als Zeitgeber anstehender Spannungspegel den Kondensator 144 aufladen. Beim Aufladen des Kondensators 144 wird der Ausgang des Operationsverstärkers 139 in seinen High-Zustand überführt. Mit abklingendem Triggersignal an der Eingangsklemme 229 öffnet der Schalter 140 und der Kondensator 144 kann sich über den Widerstand 143 entladen. Wird der am invertierenden Eingang des Operationsverstärkers 139 eingestellte Schwellwert unterschritten, fällt der Ausgang des Operationsverstärkers 139 in seinen Low-Zustand zurück.

Die Dauer des High-Signals ist proportional zu der im Kondensator 144 eingegebenen Spannung. Diese eingegebene Spannung ist ihrerseits proportional zur Periodendauer des eingangsseitig der Leerlaufstabilisierung vorgeschalteten Signalgebers für die Zündfunkenbildung. Somit ist die Dauer tH des High-Signals proportional zur Periodendauer TS des Signalgebers. Somit ist auch die Dauer tL des Low-Signals proportional zur Periodendauer TS. Folglich ist auch das Tastverhältnis T aus Dauer des High-Signals zur Dauer des Low-Signals konstant.

Denn $tH = k1 \cdot TS$; $tL = k2 \cdot TS$ und somit ist

$$T = \frac{tH}{tL} = \frac{k1 \cdot TS}{k2 \cdot TS} = \frac{k1}{k2} = \text{constant.}$$

Nachstehend soll die Funktionsweise der Einrichtung zur elektronischen Leerlaufstabilisierung beschrieben werden:

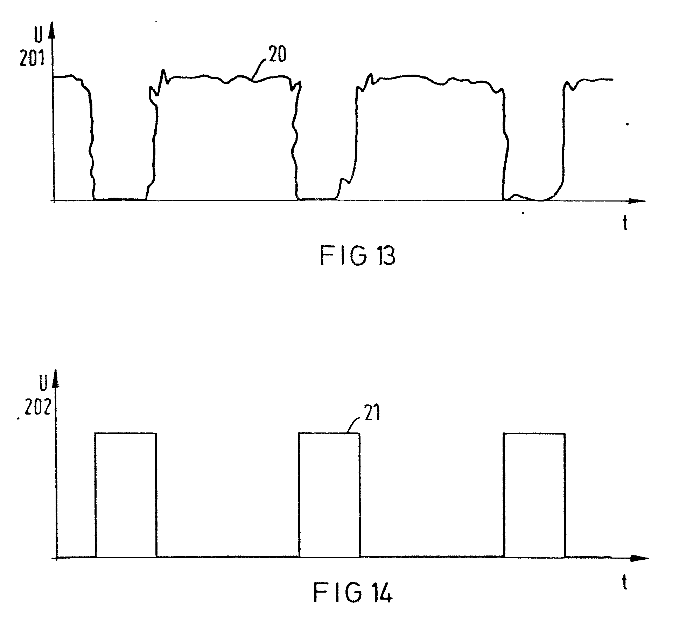

Wenn am Eingang der elektronischen Einrichtung zur Leerlaufstabilisierung vom Signalgeber für die Zündfunkenbildung beispielsweise ein Signal nach Fig. 13 ansteht, wird das Signal von der Eingangsstufe, im Ausführungsbeispiel nach den Fig. 1 und 4 ein Schmitt-Trigger mit Inverter — Baugruppe 1 —, von Störeinflüssen bereinigt, so daß ein Signal nach Fig. 14 erhalten wird. In diesem und in den folgenden Diagrammen ist jeweils auf der Abszisse die Zeit und auf der Ordinate das Signal als Spannung aufgetragen. In Fig. 13 ist also die Spannung des Signals vom Signalgeber, die Eingangsspannung U 201, mit dem Verlauf 20 aufgetragen. Sie steht an der Eingangsklemme 201 der Einrichtung zur Leerlaufstabilisierung an. Am Ausgang 202 der Eingangsstufe, also am Ausgang vom Schmitt-Trigger mit Inverter 1, steht dann die Spannung U 202 mit dem Verlauf 21 nach Fig. 14 zur Verfügung.

Faßt man die Wirkungsweise der Verzögerungseinrichtung 2 nach Fig. 1 zunächst zusammen, so wird eine Spannung U 202, nach Fig. 15, verzögert, so daß das erste Differenzierglied des Vorrangschalters 3 nach den Fig. 1 und 5, mit dem Eingang 205, an seinem Ausgang die Spannung UD1 nach Fig. 16 mit dem Verlauf 22 zur Verfügung stellt. Hinsichtlich des unverzögert gedachten Signals nach Fig. 15, bzw. am Ausgang des zweiten Differenziergliedes des Vorrangschalters 3 nach Fig. 17 entsteht eine zeitliche Verzögerung tv und eine Frühzündung um die Zeit tf. Die Spannung UD2 nach Fig. 17 am Ausgang des zweiten Differenziergliedes des Vorrangschalters 3, dessen Eingang mit 206 bezeichnet ist, hat den Verlauf 23. Am Eingang 150 der Kippstufe des Vorrangschalters 3 nach Fig. 5 steht dann die Spannung U nach Fig. 18 an. Die bistabile Kippstufe des Vorrangschalters wird durch die erste positive Differenzierspitze 24 in High-Zustand gesetzt und durch die erste negative Spitze 25 in Low-Zustand zurückversetzt. Die zweite positive Signalspitze 26 und die zweite negative Signalspitze 27 bleiben dann jeweils wirkungslos. Dadurch wird die Periode TS des Signalgebers, nach Fig. 15, beibehalten, wie es aus Fig. 19 zu ersehen ist. Hier ist auf der Ordinate die Spannung UL aufgetragen, wie sie am Ausgang der elektronischen Einrichtung zur Leerlaufstabilisierung bei einem Arbeitspunkt innerhalb des Stabilisierungsbereiches abgegeben wird.

Außerhalb des Stabilisierungsbereiches steht am Eingang der Kippstufe des Vorrangschalters jeweils nur das positive Signal 26 und das negative Signal 27 an, so daß am Ausgang der Kippstufe ein Signalverlauf entsprechend 21 nach Fig. 15, also unverzögert, erhalten wird. Außerhalb des Stabilisierungsbereiches wird also das Signal vom Signalgeber in seinem Informationsgehalt unverändert weitergegeben.

Innerhalb des Stabilisierungsbereiches wird eine Frühzündung um die Zeit $tf = TS - tv$ erzielt. Hinsichtlich des unverzögert gedachten Signals stehen dann am Ausgang der Einrichtung zur Leerlaufstabilisierung vorverlegte Signale zur Verfügung. Durch die negative Flanke des Signals vom Signalgeber bzw. durch die positive Flanke des invertierten Signals, wie es durch die Eingangsstufe, nämlich durch den Schmitt-Trigger mit Inverter erzeugt wird, erfolgt die Auslösung des Zündfunkens.

Die Arbeitsweise der Verzögerungseinrichtung 2 nach Fig. 1, die in Fig. 2 detaillierter dargestellt ist, soll anhand der Fig. 20 bis 38 im einzelnen erläutert werden:

Die Spannung vom Ausgang 202 der Eingangsstufe steht am Eingang 203 der Verzögerungseinrichtung als U 203 an. Ihr Verlauf 21 ist in F i g. 20 nochmals dargestellt. Das Differenzierglied 4 erzeugt im Ausführungsbeispiel erste Nadelimpulse 28 nach Fig. 21, die am Ausgang 208 abgegeben werden, und zeitlich kurz darauf zweite Nadelimpulse 29 nach Fig. 22, die am Ausgang 209 abgegeben werden. Mittels des Nadelimpulses nach Fig. 22 wird von der positiven Flanke des Signals U 203 am Ausgang der Eingangsstufe, im Ausführungsbeispiel des Schmitt-Triggers mit Inverter, der Sägezahngenerator 5 getriggert, der die Spannung U mit

dem Verlauf 30 nach Fig. 24 erzeugt. Der Verlauf der Sägezahnspannung ist ein lineares Abbild des Zeitverlaufes während der Periode des Signals vom Signalgeber bzw. des Signals U am Ausgang 202. Die Periode TS kann daher auch als Periode TS des Sägezahnsignals verstanden werden.

In Fig. 25 ist noch einmal der Verlauf 30 der Sägezahnspannung wiedergegeben. Diese Spannung steht am Eingang 220 des Verstärkers mit Schwellwertschalter, Bauteil 7, an. Der Schwellwert ist mit 31 veranschaulicht. Am Ausgang 221 steht dann ein Spannungsverlauf 32 nach Fig. 26 zur Verfügung.

Die Sägezahnspannung am Ausgang 212 des Sägezahngenerators 5 wird auch dem Speicher 6 zugeführt, in dem der jeweilige Maximalwert der Sägezahnspannung abgespeichert wird. Durch den Nadelimpuls U 208 nach Fig. 21 wird der Momentanwert des Sägezahns in den Speicher 6 übernommen. Da dieser Nadelimpuls jedoch unmittelbar vor dem Nullsetzen des Sägezahns erfolgt, entspricht dieser Momentanwert dem Maximalwert des Sägezahns. Dieser Maximalwert ist direkt proportional der Periodendauer des Signals vom Signalgeber für die Zündfunkenbildung und somit umgekehrt proportional zur Motordrehzahl. Der Maximalwert wird gespeichert und steht bis zum Nullsetzen mit dem nächsten Sägezahn am Ausgang 217 zur Verfügung.

Der am Schwellwert des Verstärkers mit Schwellwertschalter, Baugruppe 7, eingestellte Schwellwert entspricht einer bestimmten Verzögerungszeit tv. Erreicht die Sägezahnspannung 30 wegen zu kurzer Periodendauer TS den Schwellwert 31 nicht, so steht am Ausgang 221 kein Signal an.

Der Komparator 800 mit Differenzierglied 801, Baugruppe 8, liefert ein Signal am Ausgang 226 jedoch nur dann, wenn die Spannung am Eingang 224 die abgespeicherte maximale Sägezahnspannung, die am Eingang 225 ansteht, erreicht oder überschreitet. Im soeben geschilderten Fall arbeitet die Stabilisierungseinrichtung außerhalb des Stabilisierungsbereichs.

Ist die Periodendauer TS des als Eingangssignal dienenden Signals vom Signalgeber für die Zündfunkenbildung, der die Periodendauer des Sägezahnimpulses entspricht, so groß, daß die Sägezahnspannung den eingestellten Schwellwert erreicht, erhält der Komparator 8 an seinem Eingang 224 ein Eingangssignal. Der Beginn des Stabilisierungsbereichs ist in den Fig. 27 bis 30 veranschaulicht:

Für die am Eingang 203 anstehende Eingangsspannung 21 nach Fig. 27 kann die Sägezahnspannung 30 nach Fig. 28 gerade den eingestellten Schwellwert 31 erreichen. Wegen der Verstärkung durch den Verstärker mit Schwellwertschalter der Baugruppe 7 überschreitet die Spannung 32 am Ausgang 221 die im Speicher 6 abgespeicherte maximale Spannung 33 der Sägezahnspannung 30. Dies ist in Fig. 29 veranschaulicht. In der Baugruppe 8 gibt der Komparator 800 somit ein High-Signal ab, zu dem das Differenzierglied 801 einen Nadelimpuls bildet, der am Eingang 229 der monostabilen Kippstufe, Baugruppe 9, ansteht. Diese bildet ein Ausgangssignal mit konstantem Tastverhältnis und der monostabilen Zeit tm, wie es in Fig. 30 veranschaulicht ist.

Da der Schwellwert 31 immer nach derselben Zeit erreicht wird, unabhängig davon, welche Periodendauer der Sägezahn aufweist, ergibt sich eine konstante Verzögerung und bei wachsender Periodendauer der Sägezahnspannung, also bei sinkender Motordrehzahl, eine linear zunehmende Frühzündung, wie es aus einem Vergleich der Fig. 15 und 16 beispielsweise zu ersehen ist.

Ist die Periodendauer des Eingangssignals, TS, und entsprechend die Periodendauer des Sägezahnimpulses so groß, daß die vom Verstärker in der Baugruppe 7 verstärkte Spannung gerade so groß ist wie die maximale Sägezahnspannung, so hat man in Fig. 3 den oberen Punkt B konstanter Verzögerungszeit und linear zunehmender Frühzündung erreicht. Dies ist in den Fig. 31 bis 34 veranschaulicht. Die Periodendauer TS in Fig. 31 hat man sich größer als in Fig. 27 vorzustellen; sie ist nur aus Gründen der Darstellung gleich beibehalten. Beim Anspringen des Verstärkers in der Baugruppe 7 kann der Komparator in der Baugruppe 8 feststellen, daß die maximale Sägezahnspannung erreicht ist und der Vorrangschalter mit einem verzögerten Signal beaufschlagt werden, so daß der Signalverlauf nach Fig. 34 erzielt wird. Hinsichtlich des unverzögerten Signals 21 entspricht dies bei einer Verzögerungszeit von tv einer Frühzündung tf.

Bei noch größerer Periodendauer TS des Eingangssignals steigt die maximale Sägezahnspannung weiter an und beim Erreichen des Schwellwertes liegt die verstärkte Spannung unterhalb der maximalen Sägezahnspannung. Der Arbeitspunkt liegt jetzt im Plateaubereich nach Fig. 3, also zwischen den Punkten B und C. Die Funktionsweise ist in den Fig. 35 bis 38 veranschaulicht. Aus Gründen der zeichnerischen Darstellung ist die Periodendauer TS der Eingangsspannung wieder beibehalten, obwohl sie tatsächlich größer als in Fig. 31 ist. Die verstärkte Spannung 32 nach Fig. 37 liegt beim Erreichen des Schwellwertes 31 nach Fig. 36 unterhalb des Maximalwertes 33 der Sägezahnspannung. Es vergeht daher einige Zeit, bis die verstärkte Spannung 32 die maximale Sägezahnspannung 33 erreicht und der Komparator der Baugruppe 8 ein Signal abgibt mit der Folge, daß die Vorrangschaltung 3 an ihrem Eingang 205 ein Signal erhält.

In Fig. 37 ist schließlich eine Grenzspannung 34 eingezeichnet. Liegt der Maximalwert 33 der Sägezahnspannung oberhalb dieser Grenzspannung, so kann der Verstärker mit Schwellwertschalter, Baugruppe 7, kein Signal mehr abgeben. Wenn die Grenzspannung 34 erreicht wird, kann der Verstärker die maximale Sägezahnspannung nicht mehr erreichen, was dem Plateauabfall in der Funktionskennlinie nach Fig. 3 beim Punkt C entspricht. Die Grenzspannung 34 kann allgemein als zweiter Schwellwert verstanden werden. Wesentlich ist, daß vom Anspringen des Verstärkers in der Baugruppe 7 bis zum Durchschalten des Komparators in der Baugruppe 8 eine zusätzliche Verzögerungszeit tv' — tv verstreicht.

Dieses tv' ist um so größer als tv, nach den Fig. 31 bis 34, je mehr Zeit bis zum Erreichen der maximalen Sägezahnspannung 33 durch die verstärkte Spannung 32 verstreicht. Wie anhand der Fig. 38 veranschaulicht ist, liegt der Arbeitspunkt jetzt in einem Bereich zunehmender Verzögerungszeit. Wesentlich ist jedoch, daß aufgrund der angegebenen Schaltung ein konstanter Frühzündungswinkel $\alpha$ mit

$$\alpha = \frac{180}{TS} \cdot tf = constant$$

erzielt wird.

Wenn der Verstärker den Verstärkungsfaktor k hat, ergibt sich zwischen der Frühzündung, gemessen in Winkelgraden $\alpha$, und der Verstärkung die Beziehung

$$k = \frac{TS}{tv'} = \frac{180°}{180° - \alpha_{Plateau}}.$$

Die Frühzündung $\alpha$ in Grad entspricht einer bestimmten Plateauhöhe in Fig. 3.

Wenn in der Baugruppe 8 der Komparator 800 am Eingang 224 ein Signal feststellt, das den Maximalwert der Sägezahnspannung am Eingang 225 erreicht bzw. überschreitet, gibt sein Differenzierglied 801 einen Nadelimpuls ab, der am Eingang 229 der monostabilen Kippstufe 9 ansteht. Die monostabile Kippstufe liefert dann ein Signal konstanten Tastverhältnisses T, dessen monostabile Zeit tm vom Maximalwert der Sägezahnspannung vom Speicher 6 abhängt. Das Differenzierglied 801 der Baugruppe 8 liefert beim Übergang des Komparators 800 in seinem High-Zustand einen Nadelimpuls zur positiven Flanke, die über den Eingang 229 der monostabilen Kippstufe 9 den steuerbaren Schalter schließt. Daß das Tastverhältnis T sich in gewünschter Weise konstant einstellt, läßt sich anhand nachstehender Beziehungen veranschaulichen:

Aus

$$T = \frac{tm}{TS - tm}; \quad tm = k \cdot TS$$

folgt

$$\frac{k \cdot TS}{TS - k \cdot TS} = \frac{k}{1 - k} = k',$$

also konstant.

## Patentansprüche

1. Elektronische Einrichtung zur Leerlaufstabilisierung zwischen Signalgeber für die Zündfunkenbildung, beispielsweise Hallgeber, und Zündeinrichtung von Verbrennungsmotoren, durch die bei fallender Motordrehzahl der Zündzeitpunkt unterhalb einer ersten Motordrehzahl vorverlegt wird, in dem jeweils ein vom Signalgeber erhaltener Impuls verzögert wird und hinsichtlich des unverzögert gedachten Folgeimpulses als vorverlegtes Signal der Zündeinrichtung zugeführt wird, wobei außerhalb des Stabilisierungsbereiches zwischen der ersten und einer zweiten tieferen Motordrehzahl die unverzögerten Impulse abgegeben werden, dadurch gekennzeichnet, daß die Verzögerungseinrichtung (2) im wesentlichen besteht aus einem Sägezahngenerator (5), der von einer Flanke eines Impulses vom Signalgeber getriggert wird, der ausgangsseitig mit einem Speicher (6) sowie einem Verstärker (7) mit Schwellwertschalter verbunden ist, deren Ausgänge zu einem Komparator (8) geführt sind, der darauf abgestimmt ist, beim Erreichen und Überschreiten des im Speicher (6) abgespeicherten Wertes durch den Wert am Verstärkerausgang (7) ein Signal abzugeben, das nach weiterer Aufbereitung der Zündeinrichtung zugeleitet wird.

2. Einrichtung nach Anspruch 1, dadurch gekennzeichnet,
- daß der Komparator (8) ausgangsseitig ein Differenzierglied (801) enthält,
- daß der Ausgang des Komparators (8) mit einer monostabilen Kippstufe (9) verbunden ist, die einen gesteuerten Schalter (140) aufweist, dessen Steuereingang mit dem Komparator (8) und der eingangsseitig mit dem Speicher (6) verbunden ist und ausgangsseitig mit dem Eingang eines Operationsverstärkers (139) der über einen Speicher (Kondensator 144), der von einem Entladungszweig (Widerstand 143) überbrückt ist, an Masse liegt,
- und daß der Ausgang der monostabilen Kippstufe (9), der den Ausgang der Verzögerungseinrichtung darstellt, mit einem Eingang einer Vorrangschaltung (3) verbunden ist, an deren weiterem Eingang eine Verbindung zum Eingang der Verzögerungseinrichtung (2) hergestellt ist, wobei die Vorrangschaltung (3) darauf eingerichtet ist, bei einem Signal an ihren Eingangsklemmen zur monostabilen Kippstufe dieses zu ihrem Ausgang weiterzugeben und ohne ein solches Signal den mit dem Eingang der Verzögerungseinrichtung verbundenen Eingang (206) mit ihrem Ausgang (207) zu verbinden.

3. Elektronische Einrichtung nach den Ansprüchen 1 und 2, dadurch gekennzeichnet, daß zwischen dem Eingang der Verzögerungseinrichtung (2) und dem Speicher (6) bzw. dem Sägezahngenerator (5) die Abgriffe eines Differenziergliedes (4) für zwei kurz aufeinanderfolgende Impulse liegen, wobei dieses Differenzierglied eingangsseitig den Eingang der Verzögerungseinrichtung bildet.

4. Einrichtung nach Anspruch 1 und 2, dadurch gekennzeichnet, daß die Vorrangschaltung (3) zwei Differenzierglieder aus Blind- und Wirkwiderständen aufweist und die Differenzierglieder zwischen Blind- (106; 109) und Wirkwiderständen (107, 108) miteinander verbunden sind, wobei die Wirkwiderstände zusammen mit zwei an der Verbindungsstelle angeschlossenen, hintereinander liegenden Invertoren (110, 111) eine bistabile Kippstufe (300) dadurch bilden, daß von einem Wirkwiderstand (108) eine Verbindung zwischen den Invertoren (110, 111) und vom anderen Wirkwiderstand (107) eine Verbindung hinter dem zweiten Inverter (111) angeschlossen ist.

## Claims

1. An electronic device for the no-load stabilisation between a signal generator for ignition spark formation, for example a Hall generator, and an ignition device in internal combustion engines, by means of which the ignition time is advanced below a first engine speed when the engine speed falls, in that a pulse obtained by the signal generator is delayed and fed to the ignition device as an advanced signal in respect of the sequential pulse assumed to be undelayed, where outside the stabilisation region between the first and a second lower engine speed undelayed pulses are emitted, characterised in that the delay device (2) essentially consists of a saw-tooth generator (5) triggered by a flank of a pulse from the signal generator which has its output connected both to a store (6) and an amplifier (7) having a threshold value switch, the store and amplifier outputs being fed to a comparator (8) which is tuned to emit a signal to the ignition device after further processing the value stored in the store (6) is reached or exceeded by the value at the amplifier output (7).

2. A device as claimed in Claim 1, characterised in that the comparator (8) includes a differentiating element (801) at the output end,
   — that the output of the comparator (8) is connected to a mono-stable trigger stage (9) which possesses a controlled switch (14) whose control input is connected to the comparator (8), is connected to the store (6) at the input end and is connected at the output end to the input of an operational amplifier (139) connected to earth by means of a store (capacitor 144) bridged by a discharge branch (resistor 143),
   — and that the output of the monostabile trigger stage (9), which constitutes the output of the delay device, is connected to the input of a priority circuit (3), at whose further input a connection to the input of the delay device (2) is established, where in the event of a signal at its input terminals, connected to the monostable trigger stage, the priority circuit (3) is set to transmit said signal to its output and without such a signal it is set to connect the input (206) connected to the input of the delay device, to the output (207) thereof.

3. An electronic device as claimed in Claims 1 and 2, characterised in that between the input of the delay device (2) and the store (6) or the saw-tooth generator (5), as the case may be, there are arranged the taps of a differentiating element (4) for two pulses occurring one shortly after another, the differentiating element forming the input of the delay device at the input end.

4. A device as claimed in Claim 1 and 2, characterised in that the priority circuit (3) possesses two differentiating elements consisting of reactances and effective resistances and the differentiating elements are reactances (106; 109) and effective resistances (107, 108) mutually connected, where the effective resistances together with two consecutively arranged inverters (110, 111) connected at the junction point, form a bistable trigger stage (300) in that the link between the inverters (110, 111) is connected by an effective resistance (108) and the other effective resistance (107) is connected as a link behind the second inverter (111).

## Revendications

1. Dispositif électronique pour la stabilisation du ralenti entre un générateur de signaux pour la formation de l'étincelle d'allumage, par exemple un générateur de Hall, et le dispositif d'allumage de moteurs à combustion interne, grâce auquel l'instant d'allumage est, lorsque la vitesse de rotation du moteur baisse, avancé en-dessous d'une première vitesse de rotation du moteur, en retardant une impulsion reçue par le générateur d'impulsions et en appliquant au dispositif d'allumage comme signal avancé, du point de vue de l'impulsion de répétition supposée non retardée, alors qu'en-dehors de la plage de stabilisation, entre la première et une seconde vitesse de rotation plus basse du moteur, les impulsions non retardées sont émises, caractérisé par le fait que le dispositif à retard (2) est essentiellement constitué par un générateur en dents de scie (5) qui est déclenché par un flanc d'une impulsion du générateur d'impulsions, qui est, du côté sortie, relié à une mémoire (6) ainsi qu'à un amplificateur (7) à commutateur à valeur de seuil, dont les sorties mènent à un comparateur (8) qui est réglé pour que soit émis, lorsqu'est éteinte ou est dépassée la valeur mémorisée dans la mémoire, par la valeur qui est présente à la sortie de l'amplificateur (7), un signal qui est, après une post-élaboration, appliqué au dispositif d'allumage.

2. Dispositif selon la revendication 1, caractérisé par le fait,

— que le comparateur (8) comporte, du côté sortie, un élément différenciateur (801),

— que la sortie du comparateur (8) est reliée à un étage à bascule monostable (9) comportant un commutateur commandé (140) dont l'entrée de commande est reliée au comparateur (8) et qui du côté entrée est reliée à la mémoire (6) et du côté sortie à l'entrée d'un amplificateur opérationnel (139) qui est relié à la masse par l'intermédiaire d'une mémoire (condensateur 144), qui est shuntée par une branche de décharge (résistance 143),

— et que la sortie de l'étage à bascule monostable (9) qui représente la sortie du dispositif à retard, est reliée à une entrée d'un circuit prioritaire (3), à l'autre entrée duquel est établie une liaison menant à l'entrée du dispositif à retard (2), le circuit prioritaire (3) étant agencé de manière que pour un signal présent à ses bornes d'entrée vers l'étage à bascule monostable, il transmet ce signal à sa sortie et qu'en l'absence d'un tel signal il relie l'entrée (206) reliée à l'entrée du dispositif à retard, à sa sortie (207).

3. Dispositif électronique selon les revendications 1 et 2, caractérisé par le fait qu'entre l'entrée du dispositif à retard (2) et la mémoire (6) ou le générateur en dents de scie (5), se situent les prises d'un élément différenciateur (4) pour deux impulsions se succédant à un faible intervalle, l'élément différenciateur constituant, du côté entrée, l'entrée du dispositif à retard.

4. Dispositif selon la revendication 1 et 2, caractérisé par le fait que le circuit prioritaire (3) comporte deux éléments différenciateurs constitués par des réactances et des résistances actives, alors que les éléments différenciateurs entre réactances (106; 109) et résistances actives (107, 108) sont reliés entre eux, la réalisation étant telle que les résistances actives forment, avec deux inverseurs (110, 111) disposés l'un derrière l'autre et reliés au point de liaison, un étage à bascule bistable (300), grâce au fait qu'à partir d'une résistance active (108) est établie une liaison entre les inverseurs (110, 111) et qu'à partir de l'autre résistance active (107) est établie une liaison menant derrière le second inverseur (111).

FIG 1

FIG 2

FIG 3

FIG 4

FIG 5

FIG 6

FIG 7

FIG 8

FIG 9

FIG 10

FIG 11

FIG 12

0 046 490

FIG 13

FIG 14

0 046 490

FIG 15

FIG 16

FIG 17

FIG 18

FIG 19

25

U
203

~21

FIG 20

t

U
208

~28    ~28

FIG 21

t

U
209

~29    ~29

FIG 22

t

U

~21

FIG 23

U

TS

30

FIG 24

t

FIG 25

TS

30

31

U

tv

tf

t

FIG 26

U

32

t

FIG 27

TS

U

21

t

FIG 28

U

31

30

33

tv

t

FIG 29

U

32

33

t

FIG 30

U

tm

t

FIG 31

FIG 32

FIG 33

FIG 34

FIG 35

FIG 36

FIG 37

FIG 38